Europäisches Patentamt

European Patent Office

Office européen des brevets

(11) Veröffentlichungsnummer: **0 290 728**
**A1**

(12) **EUROPÄISCHE PATENTANMELDUNG**

(21) Anmeldenummer: 88103109.0

(22) Anmeldetag: 02.03.88

(51) Int. Cl.4: **B65G 39/073** , **B65G 45/00**

(30) Priorität: 06.05.87 DE 3715045

(43) Veröffentlichungstag der Anmeldung:
17.11.88 Patentblatt 88/46

(84) Benannte Vertragsstaaten:
AT BE CH DE ES FR GB GR IT LI LU NL SE

(71) Anmelder: **IEM Fördertechnik GmbH**
**Industriegebiet**
**D-8581 Kastl(DE)**

(72) Erfinder: **Schneider, Reinhold, Dipl.-Ing. (FH)**
**Hochstrasse 4**
**D-8487 Pressath(DE)**

(74) Vertreter: **Patentanwälte Czowalla . Matschkur**
**+ Partner**
**Dr.-Kurt-Schumacher-Strasse 23 Postfach**
**9109**
**D-8500 Nürnberg 11(DE)**

(54) Selbstreinigende Bandtrommel.

(57) Selbstreinigende Bandtrommel, insbesondere für
Spanntrommeln von Becherwerken, bei der ein ein-
oder mehrteiliges Stützelement zwischen einer Welle
(1) und einem Trommelmantel (3) angeordnet ist,
wobei der Trommelmantel (3) mit Schmutzdurchtrittsöffnungen (10) versehen ist und zwischen dem
Trommelmantel (3) und der Welle (1) eine die Welle
(1) dicht umfassende Schmutzaustragsvorrichtung
(2) angeordnet ist, die von dem Trommelmantel (3)
wenigstens in Richtung einer Trommelstirnfläche (7)
zur Welle (1) geneigt verläuft.

FIG. 2

EP 0 290 728 A1

## Selbstreinigende Bandtrommel

Die Erfindung bezieht sich auf eine selbstreinigende Bandtrommel, insbesondere für Spanntrommeln von Becherwerken, bei der ein ein-oder mehrteiliges Stützelement zwischen einer Welle und einem Trommelmantel angeordnet ist.

Ein besonderes Problem bei Becherwerken, Bandförderern od.dgl. ergibt sich aus der Tatsache heraus, daß das Fördermedium unerwünschterweise zwischen Ober-und Untergurt gerät, sodann vom Untergurt mitgeschleppt und auf die Trag-und/oder Umlauftrommeln bzw. direkt auf die Spanntrommeln abgesetzt wird. Oftmals handelt es sich bei dem Fördermedium um klebende, bisweilen rasch aushärtende Materialien, so daß sich auf den Trommeln starke Beläge bilden, die zum Schräglaufen, gegebenenfalls sogar zur Zerstörung des Förderbandes führen. Besteht das Fördermedium dagegen aus körnigen, eventuell - scharfkantigen Materialien, werden aufgrund des zwangsläufig zwischen der Bandtrommel und dem Förderband stattfindenden Abriebs am Förderband oft Verletzungen in Form kleiner Risse hervorgerufen, die ebenfalls zur Zerstörung des Förderbandes führen. Um solchen Problemen zu begegnen, ist bei einer bislang bekanntgewordenen selbstreinigenden Gurtbandumkehrrolle für Fördergurte ein Abstreifblech direkt an der Trommel angeordnet. Das von der Trommel abgestreifte Feingut wird von der Unterseite des ablaufenden Obergurtes erfaßt und in einen Auffangkasten eingebracht, aus dem es mittels einer zusätzlich vorgesehenen senkrecht zur Förderbandrichtung verlagerten Transportschnecke ausgetragen wird. Diese selbstreinigende Gurtbandumkehrrolle hat sich allerdings, wie im übrigen weitere Ausführungsformen auch, sowohl bei der Herstellung als auch in Betrieb und Wartung - zwangsläufig bedingt durch den großen konstruktiven Aufwand - als sehr aufwendig und somit aus Wirtschaftlichkeitslich anzusehende Ausführungsformen von selbstreinigenden Trommeln oder Förderbändern genügen im Gegensatz hierzu den einsatzbedingten Erfordernissen nicht, da die Entfernung und/oder der Abtransport von unerwünschtem Fördermedium bzw. von Schmutz nur sehr unvollständig erfolgt.

Der Erfindung liegt daher die Aufgabe zugrunde, eine selbstreinigende Bandtrommel der eingangs genannten Art so auszugestalten, daß sowohl die Aufnahme von zwischen Ober-und Untergurt geratenem Fördermedium und Schmutz als auch die Weiterleitung bzw. der Austrag des aufgenommenen Fördermediums bzw. Schmutzes zur Selbstreinigung von Trommel und Förderband unter kostengünstigen Herstellungs-und Betriebsbedingungen kontinuierlich und weitgehend unabhängig von der Beschaffenheit des Fördermediums erfolgt.

Zur Lösung dieser Aufgabe ist bei einer selbstreinigenden Bandtrommel der eingangs genannten Art vorgesehen, daß der Trommelmantel mit Schmutzdurchtrittsöffnungen versehen ist und daß zwischen dem Trommelmantel und der Welle eine die Welle dicht umfassende Schmutzaustragsvorrichtung angeordnet ist, die von dem Trommelmantel wenigstens in Richtung einer Trommelstirnfläche zur Welle geneigt verläuft.

Durch die erfindungsgemäße Ausgestaltung der selbstreinigenden Bandtrommel ergibt sich eine sehr einfache Möglichkeit, das zwischen Ober-und Untergurt geratene Fördermedium von Förderband zu entfernen und gleichzeitig das sich nun im Inneren der Spann-bzw. Bandtrommel befindliche Fördermedium kontinuierlich zu wenigstens einer Stirnseite der Spann-bzw. Bandtrommel hin weiterzuleiten und schließlich auszutragen. Hierbei kann gänzlich auf teuere Zusatzgeräte, wie beispielsweise Förderschnecken mit dazugehörigem Antriebsmotor od.dgl., sowie auf technisch sehr aufwendige Konstruktionen verzichtet wer den, da sich die Erfindung ausschließlich geometrische Verhältnisse und bereits vorhandene, für den Betrieb von Becherwerken, Bandförderern od.dgl. grundsätzlich erforderliche Rotationenergien zunutze macht.

In weiterer Ausgestaltung der Erfindung ist vorgesehen, daß die Schmutzaustragsvorrichtung rotationssymmetrisch ausgebildet ist, wodurch die Herstellung der Bandtrommel insgesamt wesentlich vereinfacht wird. Darüber hinaus wird durch diese Maßnahme eine sowohl gleichmäßige Weiterleitung als auch ein gleichmäßiger Austrag des von dem Förderband entfernten und von der Spann-bzw. Bandtrommel aufgenommenen Fördermediums ermöglicht, was für einen kontinuierlichen und möglicherweise stark automatisierten Betrieb beim Abtransport von dem außerhalb der Spann-bzw. Bandtrommel aufgefangenen Austrag von großer Bedeutung ist.

In diesem Zusammenhang ist es im Rahmen der Erfindung weiterhin vorgesehen, daß die Schmutzaustragsvorrichtung einen Austragsdoppelkegel bildet, bei dem die großen senkrecht zur Welle stehenden Grundflächen der spiegelbildlich gegeneinander versetzten geraden Kreiskegelstümpfe im wesentlichen mit der Trommelmittelebene zusammenfallen. Durch diese besondere Ausgestaltung der Schmutzaustragsvorrichtung ist es möglich, beim Einsatz einer solchen selbstreinigenden Bandtrommel auf veränderte Ablaufbedingungen entsprechend reagieren zu können.Fällt beispielsweise aufgrund einer veränderten Beschaffenheit des Fördermediums eine erhöhte Menge von aus der Spann-bzw. Bandtrommel auszutragenden Fördermediums oder Schmutz an, so ist es nicht unbedingt notwendig, die Geschwindigkeit des gesamten Becherwerkes oder Bandförderers herabzusetzen. Vielmehr ist durch die Weiterleitung und den Austrag auf zwei Stirnseiten der Spanntrommel eine doppelt so schnelle Entsorgung des Fördermediums und damit ein gleichbleibender Betrieb zu erreichen. Des weiteren werden sämtliche auf die Welle einer derartigen selbstreinigenden Bandtrommel wirkenden Kräfte gleichmäßig verteilt, wodurch die selbstreinigende Bandtrommel kleiner dimensioniert und demzufolge kostengünstiger hergestellt werden kann.

In weiterer Ausgestaltung sieht die Erfindung vor, daß die Schmutzaustragsvorrichtung zwischen dem Trommelmantel und der Welle als Stützelement ausgebildet ist. Hierfür ist insbesondere vorgesehen, daß die Schmutzaustragsvorrichtung mit radial verlaufenden Schlitzen versehen ist, die Versteifungsbleche aufnehmen. Die Versteifungsbleche wiederum sind sowohl mit der Schmutzaustragsvorrichtung als auch mit an den Trommelstirnflächen angeordneten Stützringen verschweißt. Diese Maßnahmen garantieren insgesamt eine nochmalige Vereinfachung von Konstruktion und Herstellung der selbstreinigenden Bandtrommel, da nur wenige, baukastenähnlich zusammensetzbare und hierdurch kostengünstig herstellbare Einzelteile notwendig sind. Gleichzeitig wird mit der Ausbildung der Schmutzaustragsvorrichtung als eingentliches Stützelement das Gewicht der selbstreinigenden Bandtrommel insgesamt verringert, was zu einer zusätzlichen Vereinfachung bei der Montage, Wartung etc. führt.

Schließlich ist erfindungsgemäß noch vorgesehen, daß der Trommelmantel durch in Abstand zueinander angeordnete Stäbe gebildet ist. Dieses Merkmal dient ebenfalls der Normierung der zu einer derartigen selbstreinigenden Bandtrommel zusammenfügbaren Einzelbauteile. Darüber hinaus besteht hierdurch die Möglichkeit, bereits bei der Herstellung dieser Spann-oder Bandtrommel die Eingenschaften bzw. Beschaffenheit des Fördermediums - durch Veränderung des Abstandes der zueinander benachbarten Stäbe - zu berücksichtigen und ohne Schwierigkeit den Belag der selbstreinigenden Bandtrommel an die jeweils entsprechenden, einsatzbedingten Gegebenheiten anzupassen.

Weitere Merkmale, Vorteile und Einzelheiten der Erfindung ergeben sich aus der nachfolgenden Beschreibung einiger bevorzugter Ausführungsformen der Erfindung sowie anhand der Zeichnung. Hierbei zeigen:

Fig. 1 eine Seitenansicht einer selbstreinigenden Bandtrommel und

Fig. 2 einen Schnitt durch eine selbstreinigende Bandtrommel gemäß Fig. 1 längs der Linie II-II mit teilweise aufgebrochener Schmutzaustragsvorrichtung.

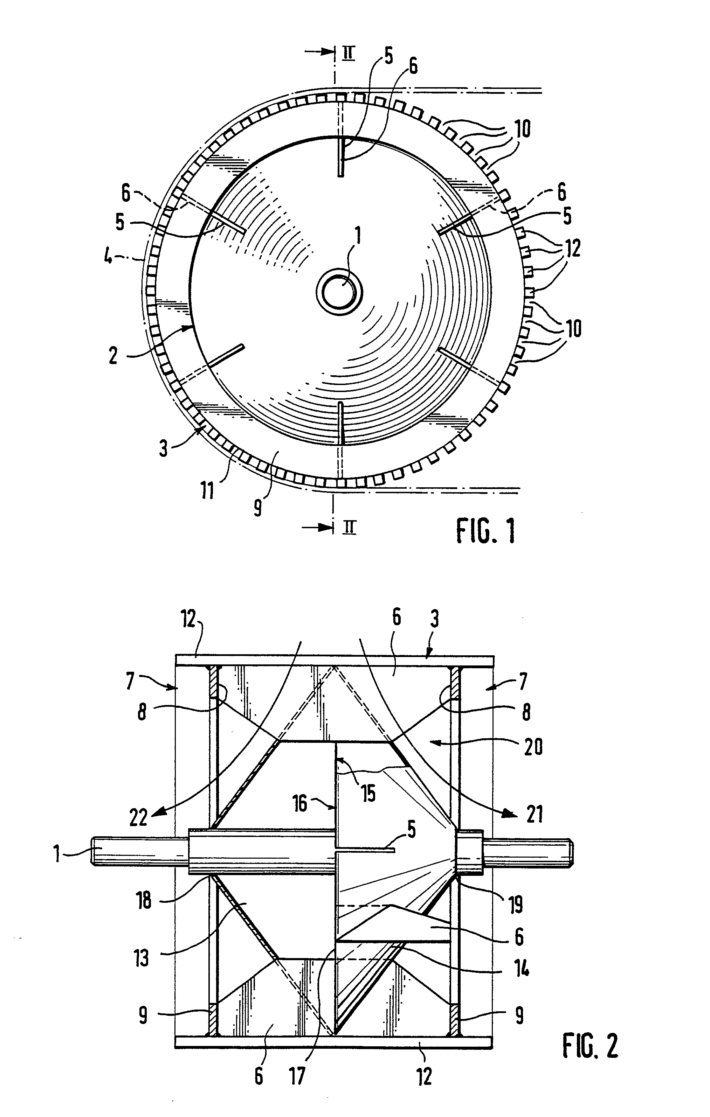

Die in Fig. 1 dargestellte selbstreinigende Bandtrommel besteht aus einer Welle 1, an der ein diese Welle dicht umfassender als Schmutzaustragsvorrichtung 2 vorgesehener Austragsdoppelkegel befestigt ist. An der hier zusätzlich als Stützelement ausgebildeten Schmutzaustragsvorrichtung 2 ist ihrerseits ein Trommelmantel 3 angeordnet, auf dem das Förderband 4 aufliegt und gleichzeitig geführt wird. Bei diesem Ausführungsbeispiel sind in zueinander gleich beabstandeten radial verlaufenden Schlitzen 5 Versteifungsbleche 6 aufgenommen, die ihrerseits mi der als Stützelement ausgebildeten Schmutzaustragsvorrichtung 2 verschweißt sind. An die im Bereich der Trommelstirnflächen 7 befindlichen Querkanten 8 der Versteifungsbleche 6 sind Stützringe 9, ebenfalls durch Verschweißen, angebracht. Der mit Öffnungen und Schlitzen 10 versehene Trommelmantel 3 liegt jeweils auf dem Umfang 11 der beiden Stützringe 9 auf und ist mit diesen gleichermaßen verschweißt. Hier besteht der Trommelmantel 3 aus einem Belag von in gleichem Abstand zueinander angeordneten Stäben 12, wobei es sich vorzugsweise um Vierkant-bzw. Rundstäbe od.dgl. handelt.

Fig. 2 zeigt im Querschnitt durch eine selbstreinigende Bandtrommel als Schmutzaustragsvorrichtung 2 den Austragsdoppelkegel, dessen beide aus Belchen gebogene gerade Kreiskegelstümpfe 13 und 14 spiegelbildlich gegeneinander versetzt sind. Dabei fallen die großen senkrecht zur Welle stehenden Grundflächen 15 und 16 im wesentlichen mit der Trommelmittelebene 17 zusammen, während die kleinen Grundflächen 18 und 19 die Welle 1 dicht umschließen. Durch diese Anordnung der Schmutzaustragsvorrichtung gelangt das von dem Förderband 4 zu entfernende Fördermedium durch die Schmutzdurchtrittsöffnungen 10 in den Innenraum 20 der Spann-bzw. Bandtrommel und wird über die zur Welle geneigt verlaufenden Oberflächen der geraden Kegelstümpfe 13 und 14 in Pfeilrichtung 21 und 22 zu den Trommelstirnflächen 7 hin weiterbefördert und schließlich ausgetragen.

Die Erfindung ist nicht nur auf das aufgeführte Ausführungsbeispiel beschränkt. Insbesondere könnte die Schmutzaustragsvorrichtung aus nur einem geraden Austragskegelstumpf bestehen, dessen große senkrecht zur Welle stehende Grundfläche 15 bzw. 16 im wesentlichen mit der einen Trommelstirnfläche 7 zusammenfällt, während die kleine Grundfläche 18 bzw. 19, die die Welle 1 dicht umfaßt, im wesentlichen mit der anderen Trommelstirnfläche 7 zusammenfällt. Durch eine derartige oder ähnliche Ausbildung der Schmutzaustragsvorrichtung ist es möglich, den Schmutzaustrag an nur einer Seite der Bandtrommel vorzunehmen und somit die Förderbandanlage insgesamt an örtliche Gegebenheiten o.ä. anzupassen.

**Ansprüche**

1. Selbstreinigende Bandtrommel, insbesondere für Spanntrommeln von Becherwerken, bei der ein ein-oder mehrteiliges Stützelement zwischen einer Welle und einem Trommelmantel angeordnet ist, dadurch gekennzeichnet, daß der Trommelmantel (3) mit Schmutzdurchtrittsöffnungen (10) versehen ist und daß zwischen dem Trommelmantel (3) und der Welle (1) eine die Welle dicht umfassende Schmutzaustragsvorrichtung (2) angeordnet ist, die von dem Trommelmantel (3) wenigstens in Richtung einer Trommelstirnfläche (7) zur Welle (1) geneigt verläuft.

2. Selbstreinigende Bandtrommel nach Anspruch 1, dadurch gekennzeichnet, daß die Schmutzaustragsvorrichtung (2) rotationssymmetrisch ausgebildet ist.

3. Selbstreinigende Bandtrommel nach Anspruch 1 oder 2, dadurch gekennzeichnet, daß die Schmutzaustragsvorrichtung (2) einen Austragsdoppelkegel bildet, bei dem die großen senkrecht zur Welle stehenden Grundflächen (15, 16) der spiegelbildlich gegeneinander versetzten geraden Kreiskegelstümpfe (13, 14) im wesentlichen mit der Trommelmittelebene (17) zusammenfallen.

4. Selbstreinigende Bandtrommel nach einem der Ansprüche 1 bis 3, dadurch gekennzeichnet, daß die Schmutzaustragsvorrichtung (2) zwischen dem Trommelmantel (3) und der Welle (1) als Stützelement ausgebildet ist.

5. Selbstreinigende Bandtrommel nach Anspruch 4, dadurch gekennzeichnet, daß die Schmutzaustragsvorrichtung (2) mit radial verlaufenden, Versteifungsbleche (6) aufnehmenden Schlitzen (5) versehen ist.

6. Selbstreinigende Bandtrommel nach Anspruch 5, dadurch gekennzeichnet, daß die Versteifungsbleche (6) mit der Schmutzaustragsvorrichtung (2) verschweißt sind.

7. Selbstreinigende Bandtrommel nach einem der Ansprüche 1 bis 6, dadurch gekennzeichnet, daß die Stützelemente mit an den Trommelstirnflächen (7) angeordneten Stützringen (9) verschweißt sind.

8. Selbstreinigende Bandtrommel nach einem der Ansprüche 1 bis 7, dadurch gekennzeichnet, daß die Trommelmantel (3) durch in Abstand zueinander angeordnete Stäbe (12) gebildet ist.

FIG. 1

FIG. 2

**Europäisches Patentamt**

## EUROPÄISCHER RECHERCHENBERICHT

Nummer der Anmeldung

| Kategorie | EINSCHLÄGIGE DOKUMENTE | Betrifft Anspruch | KLASSIFIKATION DER |
|---|---|---|---|
| | **EINSCHLÄGIGE DOKUMENTE** | | EP 88103109.0 |
| | Kennzeichnung des Dokuments mit Angabe, soweit erforderlich, der maßgeblichen Teile | Betrifft Anspruch | KLASSIFIKATION DER ANMELDUNG (Int. Cl 4) |
| Y | US - A - 2 087 813 (PETERSON) <br> * Fig. 2 * <br> -- | 1-4 | B 65 G 39/073 <br> B 65 G 45/00 |
| Y | DE - A1 - 2 639 873 (RELIANCE) <br> * Fig. 1 * <br> -- | 1-4 | |
| A | GB - A - 2 069 443 (HAUNI) <br> * Fig. 2 * <br> ---- | 1 | |

**RECHERCHIERTE SACHGEBIETE (Int. Cl.4)**

B 65 G

Der vorliegende Recherchenbericht wurde für alle Patentansprüche erstellt.

| Recherchenort | Abschlußdatum der Recherche | Prüfer |
|---|---|---|
| VIENNA | 14-07-1988 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82